# DEMANDE DE BREVET EUROPEEN

(11) **EP 0 683 144 A1**
(43) Date de publication de la demande: **22.11.1995**
(21) Numéro de dépôt: 95490020.5
(22) Date de dépôt: 18.05.1995
(51) Int. Cl.: C05F 17/00, C05F 17/02

(54) **Procédé et installation de déshydratation par compostage d'effluents liquides**

(30) Priorité: 20.05.1994 FR 9406425
(71) Demandeur: Peultier, Philippe, F-59184 Sainghin-en-Weppes (FR)
(72) Inventeur: Peultier, Philippe, F-59184 Sainghin-en-Weppes (FR)
(74) Mandataire: Hennion, Jean-Claude

(57) **Abrégé**

Le procédé de déshydratation d'effluents liquides, notamment à faible teneur en matière sèche, consiste à répartir les effluents liquides sous la forme d'une alimentation régulée, sous forme d'un goutte à goutte, dans un substrat de compostage comportant un matériau support carboné et poreux disposé dans un réacteur et à faire circuler un flux d'air à travers ledit support en sorte de réaliser une réaction de fermentation sur ledit substrat et d'évacuer par le flux d'air les gaz produits, notamment la vapeur d'eau.

De préférence on régule le débit d'alimentation des effluents liquides en fonction du taux d'humidité du substrat, notamment entre 40 et 80 %, et le débit du flux d'air en fonction de la température du substrat, notamment entre 55 et 65°C.

## Description

La présente invention concerne le traitement d'effluents liquides, notamment à faible teneur en matière sèche, en particulier des boues liquides qui sont un résidu constitué de matières en suspension et de corps microbiens recueillis au cours du processus d'épuration des eaux usées. Elle concerne plus particulièrement un procédé réalisant la déshydratation grâce à une fermentation du type compostage de tels effluents liquides. Elle concerne également une installation spécialement conçue pour la mise en oeuvre de ce procédé.

Le compostage est une décomposition aérobie de déchets organiques par des populations mélangées de micro-organismes indigènes sous condition contrôlée qui conduit à un résidu organique partiellement stabilisé. Cette technique est couramment utilisée dans le domaine du traitement des boues dans la mesure où le résidu organique obtenu peut être utilisé dans le domaine agricole.

De manière connue le compostage des boues se fait en mélangeant lesdites boues avec un support carboné poreux. Il est carboné de manière à permettre un rééquilibrage chimique du mélange, par apport de carbone, lors de la réaction de fermentation. Il est poreux pour permettre une circulation d'air favorisant l'évacuation des gaz produits lors de la réaction de fermentation.

Selon une technique connue on réalise le compostage dans un réacteur qui est une enceinte généralement fermée dans lequel est introduit le mélange boues/support de compostage. Dans ce cas il s'agit de boues préalablement déshydratées, de manière à limiter la quantité d'eau intervenant dans le mélange. Il peut également s'agir de boues ayant subi un conditionnement préalable par un floculant puis éventuellement une filtration.

Préalablement à son introduction dans le réacteur, on réalise le mélange dans un dispositif de dosage et de malaxage destiné à obtenir une répartition la plus homogène possible des boues et du support. On laisse se dérouler la réaction de fermentation dans le réacteur. Cette réaction exothermique consomme l'oxygène contenu dans l'air ambiant et produit du gaz carbonique et de la vapeur d'eau. Une circulation d'air à travers le mélange permet d'une part le renouvellement de l'oxygène de l'air et d'autre part l'évacuation des gaz produits. Lorsque la réaction de fermentation est terminée , le mélange est éventuellement traité mécaniquement de manière à séparer la partie du support qui peut être recyclée de la boue déshydratée et stabilisée.

La technique précitée présente, selon le demandeur, l'inconvénient principal qu'il est nécessaire de déshydrater ou de traiter préalablement les boues liquides pour réaliser le mélange à introduire dans le réacteur. Le document GB-A-1 498 938 décrit un procédé de ce type mettant en oeuvre des boues liquides, à faible teneur en matière sèche. Selon ce procédé on réalise un lit de compostage en déposant dans un réacteur un support végétal apte à réaliser une matrice poreuse et perméable à l'air, suffisamment incompressible pour obtenir les conditions d'un compostage aérobie, et en arrosant ledit support végétal avec les boues liquides.

On obtient ainsi un drainage du lit de compostage par la liqueur provenant des boues liquides ; la liqueur ainsi drainée, qui a un taux de matières sèches inférieur à celui des boues liquides, est recyclée sur le lit de compostage ; une partie de la liqueur est absorbée par le matériau de compostage et est éliminée par évaporation.

Cependant selon le demandeur le procédé précité présente l'inconvénient majeur de provoquer un fort gradient de concentration et d'humidité dans le lit de compostage, la partie haute du lit étant plus riche en matières sèches et plus humide, ce qui entraîne la formation d'une croûte en surface et une fermentation hétérogène. Pour pallier cet inconvénient il est nécessaire de mélanger fréquemment le lit de compostage.

Le but visé par le demandeur est de proposer un procédé de traitement d'effluents liquides, notamment à faible teneur en matière sèche qui réalise la déshydratation des effluents et, dans le cas de boues liquides, qui réalise également le compostage desdites boues, sans présenter les inconvénients précités.

En dehors des boues liquides provenant de station d'épuration ou de boues industrielles, il peut s'agir d'autres types d'effluents par exemple : résidus liquides de fabrication, eaux de lavage industrielles , lisier, vidanges, effluents liquides contenant des fientes ou des graisses.

De manière connue par le document GB-A-1 498 938, ce procédé met en oeuvre un matériau support carboné et poreux disposé dans un réacteur ainsi qu'un flux d'air circulant à travers ledit support, et consiste à introduire les effluents liquides dans un substrat de compostage comportant ledit matériau support en sorte de réaliser une réaction de fermentation sur ledit substrat et d'évacuer par le flux d'air les gaz produits, notamment la vapeur d'eau.

De manière caractéristique selon l'invention, l'introduction des effluents liquides se fait sous la forme d'une alimentation régulée, par goutte à goutte, de manière à avoir une imprégnation non saturante du matériau support.

Ainsi on n'effectue pas un mélange préalable du support avec les effluents ceux-ci sont ajoutées progressivement à tout le support, par le biais du goutte à goutte, de manière à avoir une imprégnation non saturante, mais suffisante pour que se réalise la réaction de fermentation. Le flux d'air , qui évacue également les gaz de fermentation, permet d'accélérer la déshydratation . On définit sous le terme substrat de compostage un matériau support carboné et poreux, imprégné d'effluents liquides , qui puisse développer une réaction de fermentation du type compostage. Lorsque les effluents liquides sont des boues avec des matières en suspension et des corps microbiens, le substrat de compostage peut être constitué uniquement du matériau support carboné et poreux. Par contre lorsque les effluents liquides contiennent des matières sèches qui ne sont pas aptes à développer ce type de réaction de fermentation, le substrat de compostage comporte non seulement le matériau support carboné et poreux mais également d'autres constituants, parmi lesquels des agents fermentescibles permettant le développement d'une réaction de fermentation.

De préférence le flux d'air circulant à travers le substrat de compostage et/ou les effluents sont à une température supérieure à la température de l'air, de manière à favoriser la déshydratation.

Avantageusement le procédé selon l'invention consiste en outre à contrôler le taux d'humidité et la température du substrat et à réguler le débit d'alimentation des effluents liquides en fonction du taux d'humidité du substrat et le débit du flux d'air en fonction de la température du substrat.

De préférence le débit d'alimentation en effluents liquides est réglé pour maintenir le taux d'humidité du substrat entre 4O et 8O%.

De préférence le débit du flux d'air est réglé pour maintenir la température du substrat entre 55 et 65°C.

Dans le but d'accélérer la déshydratation et également le compostage, il est possible d'ajouter des agents fermentescibles soit dans l'effluent liquide soit en addition dans le substrat de compostage. De plus, dans le but de faciliter la fermentation, il est possible d'ajouter des éléments minéraux soit dans l'effluent liquide soit en addition dans le substrat de compostage.

Le procédé de l'invention s'applique notamment mais non exclusivement aux effluents liquides à faible teneur en matière sèche. Il peut en particulier être mis en oeuvre avec des effluents ayant une forte teneur en matière sèche, jusqu'à 80 %, pour autant que lesdits effluents soient dans un état liquide qui soit apte à une alimentation par goutte à goutte. Il s'agit par exemple d'effluents chauds à forte teneur en matière grasse, en particulier des effluents de lavage de laine. Dans le cas de boues de station d'épuration contenant de l'ordre de 20 % de matière sèche, après passage sur un filtre à bande ou dans une centrifugeuse, un traitement préalable est nécessaire pour donner auxdites boues l'état liquide adéquate ; par exemple les boues seront malaxées dans un mélangeur à grande vitesse, supérieure à 1 000 tours / mm.

C'est un autre objet de l'invention que de proposer une installation de déshydratation d'effluents liquides, notamment à faible teneur en matière sèche, spécialement conçue pour la mise en oeuvre du procédé précité.

Cette installation de déshydratation comprend un réacteur, apte à contenir un substrat de compostage, et des moyens de circulation forcée d'un flux d'air à travers ledit substrat. Elle comporte de plus des moyens d'alimentation régulée en effluents liquides , disposés dans le réacteur de manière à réaliser une répartition des effluents liquides dans tout le volume du substrat, sous forme d'un goutte à goutte.

De préférence les moyens d'alimentation régulée en effluents liquides consistent en au moins une canalisation qui est percée d'orifices, ladite canalisation étant disposée à l'intérieur du réacteur de manière à traverser le substrat de compostage.

L'installation comporte un support perméable, du type caillebotis, qui est disposé dans la partie basse du réacteur ; de plus les moyens de circulation d'air comprennent une première tubulure débouchant dans le réacteur dans la zone comprise entre ledit support perméable et le fond du réacteur et une seconde tubulure débouchant dans la partie haute du réacteur au-dessus du niveau du substrat de compostage.

Avantageusement l'installation comporte un échangeur de chaleur dans lequel le flux d'air sortant du réacteur réchauffe l'air entrant dans le réacteur. Etant donné que la réaction de fermentation est exothermique, le flux d'air de sortie a une température plus élevée que le flux d'air d'entrée ; la disposition particulière précitée permet, grâce l'échangeur de chaleur, de récupérer une partie de la chaleur produite par la fermentation pour réchauffer l'air entrant dans le réacteur, ce qui permet d'augmenter le rendement de déshydratation obtenu.

De préférence l'installation comporte des moyens de mesure de la température du substrat de compostage, des moyens de mesure de l'humidité du substrat de compostage, des moyens de réglage du débit d'alimentation goutte à goutte des effluents liquides, des moyens de réglage du débit du flux d'air, et enfin des moyens de régulation apte à réguler le débit des effluents liquides en fonction de l'humidité mesurée et apte à réguler le débit de l'air en fonction de la température mesurée.

Grâce à ces différents moyens, il est possible à l'utilisateur de piloter efficacement les différents paramètres de fonctionnement de son installation pour obtenir le meilleur rendement de déshydratation et la meilleure efficacité de compostage.

Avantageusement, pour assurer l'enlèvement du substrat de compostage en fin de cycle à l'aide d'un matériel adéquat, par exemple une pelle mécanique ou pelleteuse, montée sur deux chenilles, l'installation de l'invention comporte deux voies de roulement, disposées sur le fond du réacteur de sorte que la pelleteuse puisse pénétrer et se déplacer dans le réacteur. Le support perméable, du type caillebotis est disposé de part et d'autre des deux voies de roulement et délimite avec celles-ci la partie basse du réacteur. La première tubulure de circulation d'air débouche dans ladite partie basse sous le support perméable de part et d'autre des voies de roulement. Eventuellement, les voies de roulement étant des structures en béton, elles comportent des passages pour ladite tubulure.

Dans cette disposition particulière, il est préférable que l'installation comporte une pluralité de canalisations en réseau ; les canalisations d'un même réseau ont une direction générale qui est verticale lorsqu'elles sont en place dans le réacteur et sont réliées à une ligne de raccordement horizontale qui est équipée d'une poignée de levage.

La présente invention sera mieux comprise à la lecture de la description qui va être faite d'un exemple de réalisation d'une installation de déshydratation de boues liquides par compostage, illustré par le dessin annexé dans lequel :
la figure 1 est une représentation schématique en coupe de l'installation, selon une première variante et,
la figure 2 est une représentation simplifiée de l'installation selon une seconde variante.

Dans le présent texte on dénomme sous le terme général effluents liquides des rejets liquides de quelque nature et de quelque provenance que ce soit, qui contiennent le plus souvent une faible quantité de résidus de quelque nature que ce soit, pouvant aller de quelques grammes à quelques dizaines de grammes par litre.

Dans le cadre des mesures prises pour la protection de l'environnement, on comprend que ce type d'effluent liquide pose des problèmes de rejet, lorsqu'il n'est pas possible de les réutiliser à d'autres fins, notamment en agriculture. Il est alors nécessaire de procéder à différents traitements pour éliminer les résidus contenus dans ces effluents, par exemple par filtration, ou encore pour concentrer lesdits effluents de manière à avoir une quantité de résidus plus importante, notamment par floculation, évaporation ...

En particulier lorsque les effluents liquides sont ce que l'on appelle couramment des boues liquides, c'est-à-dire des effluents qui sont des résidus constitués de matières en suspension et de corps microbiens recueillis au cours du processus d'épuration des eaux usées, il importe que la concentration soit suffisamment importante pour que lesdites boues ne soient plus liquide mais aptes à être mélangées avec un support carboné poreux permettant le compostage.

Une particularité du procédé de la présente invention est de réaliser la déshydratation des effluents liquides en mettant en oeuvre la technique de compostage. En effet le demandeur a constaté que , indépendamment de l'intérêt du compostage lui-même, les conditions de la réaction de fermentation étaient des conditions favorables à la déshydratation , à savoir l'élévation de température provenant de la réaction exothermique de fermentation, la circulation d'air permettant l'évacuation des gaz produits ainsi que la production de vapeur d'eau résultant de la fermentation.

Le demandeur a pu vérifier que ces conditions permettaient la déshydratation d'effluents liquides, y compris à faible teneur en matière sèche, pour autant que la réaction de fermentation se passe sur un substrat de compostage alimenté à l'aide desdits effluents sous une forme régulée, sous forme d'un goutte à goutte, apte à ne pas saturer le support carboné poreux mais apte à permettre le développement optimal de la réaction de fermentation.

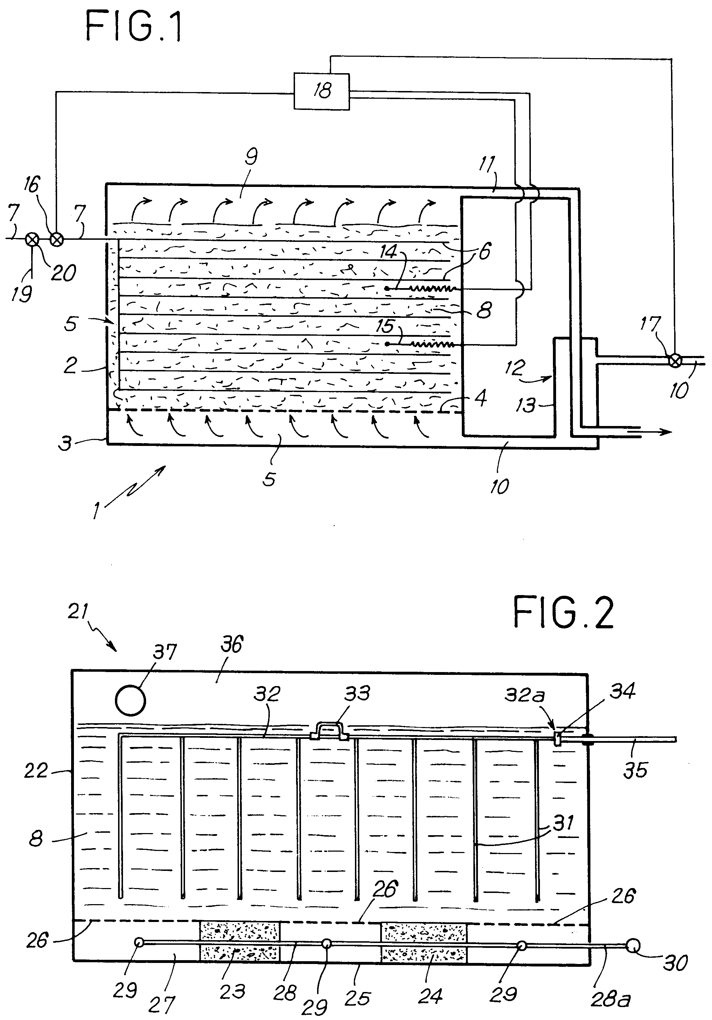

L'installation 1 illustrée à la figure 1 comprend un réacteur 2 qui est une chambre ayant par exemple la forme d'un parallélépipède rectangle dont le fond 3 est pourvu d'un support perméable, notamment de caillebotis 4, délimitant une zone inférieure 5.

Dans la portion du réacteur 2 située au-dessus du caillebotis 4 est aménagé un réseau 5 de canalisations 6. Ledit réseau 5 est alimenté en effluents liquides par une conduite d'alimentation 7. Chaque canalisation 6 est percée de petits trous permettant le passage des effluents liquides sous forme de gouttes.

Le réacteur est rempli d'un substrat de compostage 8 qui recouvre totalement le réseau 5 de canalisations 6. Ainsi ces canalisations 6 sont en quelque sorte noyées dans la masse du substrat 8.

Le nombre de canalisations, leur répartition à l'intérieur du réacteur, le nombre de trous et leurs dimensions, tous ces paramètres sont déterminés en sorte que les effluents liquides provenant de la conduite d'alimentation 7 diffuse dans tout le substrat de compostage 8 sous forme d'un goutte à goutte apte à imprégner ledit substrat 8 sans toutefois le saturer, réalisant des conditions d'humidité favorable pour le développement de la réaction de fermentation.

La partie haute 9 du réacteur est laissée libre, n'étant pas remplie par le substrat de compostage 8.

Une circulation forcée d'air dans le réacteur 2 est obtenue grâce à une première tubulure 10 d'entrée, qui débouche dans le réacteur 2 dans la partie basse 5 de celui-ci, située en dessous des caillebotis 4, et à une seconde tubulure 11 de sortie qui débouche dans la partie haute 9 du réacteur 2.

Dans l'exemple illustré, l'installation 1 comporte un échangeur 12 permettant une certaine récupération de la chaleur produite au cours de la réaction de fermentation. Cette échangeur 12 consiste en une cuve 13 qui est traversée par la tubulure de sortie 11. La cuve 13 est elle même raccordée à la tubulure d'entrée 10 et alimentée par de l'air provenant d'un système d'alimentation non représenté.

Le substrat de compostage 8 a une composition variable suivant le type d'effluent liquide qui est à déshydrater. Il comporte en tout état de cause un support carboné poreux, qui est un support de compostage habituellement utilisé pour le compostage des boues concentrées. Généralement on utilise des déchets de bois, par exemple de la sciure ou des écorces broyées, des copeaux de bois, de la paille broyée, des roseaux, des broyats de bois ...

S'agissant de boues liquides qui contiennent des matières en suspension et des corps microbiens, le substrat de compostage selon l'invention peut être constitué uniquement du support de compostage précité, puisque la présence des corps microbiens permet le développement de la réaction de fermentation lorsque les conditions de température et d'humidité sont réunies.

Dans ce cas le fonctionnement de l'installation est le suivant. On a introduit dans le réacteur le substrat de compostage 8, qui est dans le cas présent uniquement constitué du support du type broyat de bois de telle sorte que ledit substrat recouvre intégralement le réseau 5 de canalisations 6. On introduit les boues liquides par la conduite d'alimentation 7 à travers le réseau 5. Les boues liquides passe par les trous ménagés dans la canalisation 6 en sorte de réaliser une alimentation en goutte à goutte du substrat 8. On alimente par la tubulure 10 un flux d'air qui pénètre dans la partie basse 5 du réacteur 2, passe à travers les espaces ménagés dans les caillebotis 4, traverse le substrat poreux 8 pour déboucher dans la partie haute 9 du réacteur 2 et être évacué par la tubulure de sortie 11.

La réaction de fermentation, c'est-à-dire la décomposition des déchets organiques par les micro-organismes se produit dans la masse du substrat. Cette réaction provoque l'élimination progressive d'une certaine quantité de résidus, produit corrélativement du gaz carbonique et de la vapeur d'eau, et produit également de la chaleur, qui élève la température du substrat. Le flux d'air traversant le substrat permet d'éliminer par entraînement les gaz produits, y compris la vapeur d'eau. De plus la température du flux d'air sortant par la tubulure 11 est supérieure à celle du flux d'air entrant par la tubulure 10, du fait que le flux d'air est réchauffé lors de son passage dans le substrat par la chaleur dégagée lors de la réaction exothermique de fermentation. Cette chaleur est en partie récupérée dans l'échangeur 12 par échange entre le flux d'air alimenté et la tubulure de sortie 11. Cet apport calorifique permet d'augmenter la température du flux d'air entrant et donc d'augmenter le rendement de déshydratation dans la mesure où l'on obtient une évaporation meilleure lorsque l'air circulant dans le substrat 8 est à une température plus élevée.

De préférence l'installation 1 comporte des moyens de régulation permettant d'optimiser son fonctionnement. Ces moyens peuvent consister notamment dans des capteurs de température 14, mesurant la température régnant dans la masse du substrat 8 de compostage, des capteurs d'humidité 15 mesurant l'humidité régnant dans la masse du substrat 8. Ces capteurs 14, 15 sont connectés à un circuit électronique de commande relié également aux vannes 16, 17, montées respectivement sur la conduite d'alimentation 7 en effluents liquides et la tubulure d'entrée 10 d'air, éventuellement en amont de l'échangeur 12. Le circuit électronique 18 est programmé pour régler, grâce à la vanne 16 le débit d'effluents liquides c'est-à-dire l'importance du goutte à goutte dans le substrat de compostage 8 en fonction du taux d'humidité régnant dans la masse dudit substrat 8 et mesuré par le capteur 15. Cette régulation du débit d'effluents liquides est réalisée de préférence pour que le taux d'humidité du substrat de compostage 8 reste compris entre 40 et 80 %.

Le circuit électronique 18 est programmé en sorte de régler le débit d'air entrant dans le réacteur 2 et traversant le substrat 8, grâce à la vanne 17, en fonction de la température régnant dans la masse du substrat 8 mesurée par le capteur 14. Cette régulation du flux d'air est réalisée en sorte que le température du substrat reste comprise entre 55 et 65 °C.

Dans un exemple donné à titre non exhaustif, de déshydratation de boues liquides comportant 30 grammes par litre de résidus, dont 75 % de matières organiques, le débit d'alimentation en boues liquides était de 12 m³ par jour, le débit d'alimentation en air était de 2 000 m³ par heure, la température de l'air entrant dans le réacteur était de 30° C , celle des boues liquides de 15°C. Le substrat de compostage 8 était constitué de broyats de bois. Dans l'exemple précité, le réacteur 2 contenait de l'ordre de 80m³ de substrat de compostage 8. Les résidus non décomposés sous forme de gaz restent sur le substrat 8 . Ceci va progressivement modifier la porosité du substrat et gêner les conditions opératoires de la fermentation. Il est donc nécessaire de renouveler le substrat 8. Dans l'exemple précité, ce substrat a dû être renouvelé après un fonctionnement de 111 jours ; c'est-à-dire après déshydratation de plus de 1 300 m³ de boues liquides. Bien sûr ce substrat est par la suite traité comme tout support de compostage habituel.

S'agissant d'effluents liquides dont le résidu sec ne comporte pas de matières organiques aptes à développer une réaction de fermentation, il est nécessaire que des agents fermentescibles et éventuellement des éléments minéraux soient apportés ou directement inclus dans le support carboné poreux ou encore mélangés aux effluents liquides avant introduction dans le réacteur. Ainsi le support carboné poreux, en combinaison avec les agents fermentescibles ainsi apportés constituent le substrat de compostage 8 apte à développer la réaction de fermentation.

Par exemple s'agissant d'effluents purement chimiques, il est possible d'ajouter des sucres.
Cette addition d'agents fermentescibles, dans l'effluent ou dans le support carboné poreux peut également être mise en oeuvre pour la déshydratation des boues liquides, en vue d'améliorer le rendement du procédé. Il est également possible d'améliorer ce rendement en alimentant dans le réacteur 2 un effluent liquide chaud, de préférence jusqu'à au maximum 60 °C, et comme on l'a vu précédemment, en introduisant un flux d'air chaud, également au maximum de 60 °C.

Dans une installation de ce type, un problème peut se poser lorsque les effluents liquides contiennent comme résidus des lipides. En effet la réaction étant exothermique, il y a des risques d'auto-combustion des lipides en cas d'élévation localisée trop importante de température. Pour remédier à cette difficulté, on a prévu sur la conduite d'alimentation 7 en effluents liquides une dérivation 19 correspondant à une alimentation en eau pure sous pression , avec une électrovanne 20 qui est connectée au circuit électronique 18. Ainsi lorsque les capteurs de température 14 détecte une élévation anormale de température dans le substrat 8, le circuit électronique 18 commande la fermeture de la vanne 16 d'alimentation en effluents liquides et l'ouverture de la vanne 20 d'alimentation en eau pure sous pression.

L'installation 21 qui est illustrée à la figure 2 présente une seconde variante de réalisation qui permet l'enlèvement du substrat de compostage 8 hors du réacteur 22 à l'aide d'un matériel adéquat, du type pelle mécanique ou pelleteuse équipée de deux chenilles.

Cette installation 21 comporte de manière caractéristique deux voies de roulement 23, 24, une pour chaque chenille, qui sont disposées sur le fond 25 du réacteur 22.

De part et d'autre de ces deux voies de roulement 23, 24, sont disposés les caillebotis 26 qui délimitent, avec les deux voies de roulement 23, 24 la partie basse 27 du réacteur 22. Dans cette partie basse 27 sont introduites des tubulures 28 d'évacuation du flux d'air traversant le substrat de compostage 8. Ces tubulures 28 sont raccordées à des collecteurs 29, disposés de part et d'autre et parallèlement aux voies de roulement 23, 24, sur la longueur du réacteur 22. L'ensemble de ces collecteurs 29 est raccordé par une tubulure 28a à un collecteur général 30 qui est extérieur au réacteur 22 et relié à une source d'aspiration.

Les voies de roulement 23, 24 étant formées de structure en béton, elles comportent des évidements permettant le passage des tubulures 28 reliant les collecteurs 29. Chaque collecteur 29, situé dans la partie basse 27 du réacteur est pourvu d'orifices d'aspiration de l'air régnant dans cette partie basse.

L'alimentation en effluents liquides est réalisée grâce à une pluralité de canalisations 31 montées en réseau, chaque canalisation 31 du réseau ayant une direction générale qui est verticale. Toutes ces canalisations 31 sont reliées à une ligne de raccordement 32 qui est horizontale et qui se situe dans la partie haute du substrat de compostage 8. Dans sa partie médiane, cette ligne de raccordement 32 comporte une poignée 33 de levage. A une extrémité latérale 32a elle comporte un raccord 34 permettant le raccordement de ladite ligne 32 à une canalisation 35 venant de l'extérieur.

Dans la partie supérieure 36 du réacteur est disposée une tubulure 37 d'alimentation en air.

Le fonctionnement de l'installation 21 est identique à celui de la première variante. Pour l'enlèvement du substrat de compostage, l'opérateur ouvre une porte qui dégage la face avant du réacteur 22 et notamment qui donne accès aux deux voies de roulement 23, 24. Grâce à une rampe d'accès, la pelleteuse peut, après avoir dégagé progressivement le substrat 8 de compostage, pénétrer à l'intérieur du réacteur et vider totalement celui-ci. Pour se faire il faut également enlever au fur et à mesure toutes les canalisations 31 en réseau. Pour ce faire il suffit à l'opérateur de retirer le raccord 34, et grâce à la pelleteuse, se saisir de la poignée de levage 33 et de soulever la canalisation en réseau 31 correspondante. Le fait que les canalisations aient une direction générale verticale, à travers le substrat de compostage, facilite cet enlèvement, sans entraînement du substrat.

Comme on le comprend, la présence des voies de roulement 23, 24 permet d'avoir accès au substrat de compostage, directement de l'intérieur du réacteur sans retirer les caillebotis 26.

Le procédé et l'installation de la présente invention sont particulièrement destinés à la déshydratation des effluents liquides ayant une faible teneur en matière sèche. Cependant il ressort clairement de la description qui vient d'être faite que ce qui compte avant tout n'est pas la teneur en matière sèche mais la capacité de l'effluent à diffuser sous forme d'un goutte à goutte dans tout le volume du substrat. Ainsi il est possible de traiter des effluents liquides qui contiennent une forte teneur en matière sèche, jusqu'à 80 %, pour autant que lesdits effluents se présentent dans un état liquide qui soit apte à réaliser cette diffusion par goutte à goutte. Il s'agit notamment d'effluents chauds contenant des matières grasses, en particulier il peut s'agir d'eau de lavage de la laine, comportant un taux de l'ordre de 70 % de suint.

Lorsque les effluents à traiter n'ont pas l'état liquide qui est requis pour la mise en oeuvre du procédé, il est éventuellement possible de leur faire subir un traitement préalable destiné à leur conférer ledit état. Par exemple s'agissant de boues de station d'épuration contenant 20 % de matière sèche après passage sur filtre bande ou sur centrifugeuse, un traitement préalable peut consister dans un malaxage dans un mélangeur avec une vitesse de rotation rapide, supérieure à 1 000 tours/ minute. Ce traitement préalable à pour effet de casser les polymères et donner auxdites boues l'état liquide recherché.

## Revendications

1. Procédé de déshydratation d'effluents liquides, mettant en oeuvre un matériau support carboné et poreux disposé dans un réacteur et un flux d'air circulant à travers ledit support consistant à introduire les effluents liquides, dans un substrat de compostage comportant ledit matériau support en sorte de réaliser une réaction de fermentation sur ledit substrat et d'évacuer par le flux d'air les gaz produits, notamment la vapeur d'eau, caractérisé en ce que l'introduction des effluents liquides se fait sous la forme d'une alimentation régulée, par goutte à goutte, de manière à avoir une imprégnation non saturante du matériau support.

2. Procédé selon la revendication 1 caractérisé en ce qu'il consiste à contrôler le taux d'humidité et la température du substrat et à réguler le débit d'alimentation des effluents liquides en fonction du taux d'humidité du substrat et le débit du flux d'air en fonction de la température du substrat.

3. Procédé selon la revendication 2 caractérisé en ce que le débit d'alimentation en effluents liquides est réglé pour maintenir le taux d'humidité du substrat entre 4O et 8O%.

4. Procédé selon la revendication 2 caractérisé en ce que le débit du flux d'air est réglé pour maintenir la température du substrat entre 55 et 65°C.

5. Procédé selon l'une des revendications 1 à 4 caractérisé en ce que des agents fermentescibles sont ajoutés soit dans l'effluent liquide soit en addition dans le substrat de compostage.

6. Installation de déshydratation d'effluents liquides à faible teneur en matières sèches, qui comprend un réacteur (2), apte à contenir un substrat de compostage (8), et des moyens de circulation forcée d'un flux d'air à travers ledit substrat (8), caractérisée en ce qu'elle comporte des moyens d'alimentation en effluents liquides , disposés dans le réacteur de manière à réaliser une répartition des effluents liquides dans tout le volume du substrat (8) sous forme d'un goutte à goutte.

7. Installation selon la revendication 6 caractérisée en ce que les moyens d'alimentation en effluents liquides consistent en au moins une canalisation qui est percée d'orifices, et qui est disposée à l'intérieur du réacteur de manière à traverser le substrat de compostage.

8. Installation selon l'une des revendication 6 ou 7 caractérisée en ce qu'elle comporte un échangeur de chaleur (12) dans lequel le flux d'air sortant du réacteur réchauffe l'air entrant.

9. Installation selon la revendication 6 caractérisée en ce qu'elle comporte des moyens de mesure (14) de la température du substrat de compostage, des moyens de mesure (15) de l'humidité du substrat de compostage, des moyens de réglage du débit d'alimentation (16) des effluents liquides, des moyens de réglage du débit du flux d'air (17), et enfin des moyens de régulation (18) apte à réguler le débit des effluents liquides en fonction de l'humidité mesurée et apte à réguler le débit de l'air en fonction de la température mesurée.

10. Installation selon la revendication 6 caractérisée en ce qu'elle comporte deux voies de roulement (23, 24) disposées sur le fond (25) du réacteur (22), et un support perméable (26), du type caillebotis, disposé de part et d'autre desdites voies de roulement (23, 24), qui délimitent la partie basse (27) du réacteur (22), en ce que les moyens de circulation d'air comprennent une première tubulure (28) débouchant dans le réacteur dans ladite partie basse (27) sous le support perméable (26) de part et d'autre des voies de roulement (23, 24) et une seconde tubulure (37) débouchant dans la partie haute du réacteur au-dessus du niveau du substrat de compostage (8).

11. Installation selon la revendication 10 caractérisée en ce qu'elle comporte une pluralité de canalisations (31) en réseau, les canalisations d'un même réseau ayant une direction générale verticale, et une ligne de raccordement (32) horizontale et en ce que ladite ligne de raccordement horizontale (32) est équipée d'une poignée de levage (33).
